# EUROPÄISCHE PATENTSCHRIFT

(11) **EP 2 932 117 B1**
(45) Veröffentlichungstag und Bekanntmachung des Hinweises auf die Patenterteilung: **27.02.2019**
(21) Anmeldenummer: 13805409.3
(22) Anmeldetag: 16.12.2013
(51) Int. Cl.: F16C 33/37, F16C 19/36

(54) **WÄLZLAGER**
ROLLING BEARING
PALIER À ROULEMENT

(30) Priorität: 17.12.2012 DE 102012223316
(43) Veröffentlichungstag der Anmeldung: 21.10.2015
(73) Patentinhaber: Aktiebolaget SKF, 415 50 Göteborg (SE)
(72) Erfinder: HOFMANN, Sabine, 97072 Würzburg (DE); LIANG, Baozhu, 97456 Hambach (DE)
(74) Vertreter: Kuhstrebe, Jochen
(86) Internationale Anmeldenummer: PCT/EP2013/076719
(87) Internationale Veröffentlichungsnummer: WO 2014/095733

(56) Entgegenhaltungen:
- WO-A1-2011/031931
- WO-A2-2012/076583
- JP-A- 2007 162 920
- US-A1- 2009 252 448

## Beschreibung

Die Erfindung betrifft ein Wälzlager mit mindestens einem Innenring und mindestens einem Außenring, wobei zwischen den Lagerringen eine Anzahl Wälzkörper angeordnet sind, wobei die Wälzkörper durch einen Käfig gehalten werden, wobei der Käfig aus einer Anzahl Käfigsegmenten besteht, wobei jeweils ein Käfigsegment in Umfangsrichtung des Wälzlagers zwischen zwei Wälzkörpern angeordnet ist, wobei jedes Käfigsegment zwei Wälzkörper an mindestens zwei der Form des Wälzkörpers angepassten Kontaktflächen berührt, ohne den Wälzkörper rahmenartig einzufassen, wobei die einzelnen Käfigsegmente nicht miteinander verbunden sind, wobei jedes Käfigsegment an seinen axialen Enden jeweils ein Endelement mit einer Stirnfläche zur axialen Anlage des Wälzkörpers aufweist und wobei die beiden axial endseitig angeordneten Endelemente mit einem Trägerelement (Verbindungsbalken) miteinander verbunden sind, wobei am Trägerelement mindestens ein das Trägerelement radial überragendes Führungselement angeordnet ist, das eine der Form des Wälzkörpers angepasste Kontaktfläche aufweist.

Ein Wälzlager dieser Art offenbart die US 2009/0252448 A1**.** Ähnliche Lösungen zeigen die JP 2007 198 589 A1**,** die JP 2009 162 280 A**,** die EP 1 961 982 A1**,** die WO 2011/031931 A1 und die JP 2007 162920 A**.**

Ein anderes Wälzlager ist aus der WO 2012/076583 A2 bekannt. Statt eines klassischen einstückigen Lagerkäfigs wird hier - wie bei den oben genannten Lösungen - der Käfig durch eine Anzahl Käfigsegmente gebildet. Dies hat den Vorteil, dass eine besonders gute Eignung für große Kegelrollenlager besteht und die hier auftretenden Belastungen besonders gut aufgenommen werden können. Des Weiteren können die einzelnen Käfigsegmente gut montiert werden; gleichzeitig kann ein geringes Käfiggewicht erreicht werden. Die Ausbildung der Käfigsegmente ermöglicht eine sichere Aufnahme des Wälzkörpers und eine zuverlässige Führung des Käfigsegments am Wälzkörper. Die Käfigsegmente kommen dabei bei bestimmungsgemäßer Benutzung nicht in Berührung; sie sind nicht miteinander verbunden. Jede Kegelrolle wird dabei von einer rahmenartigen Struktur umgeben, die durch das Käfigsegment gebildet wird.

Weitere Lösungen zeigen die DE 10 2011 004 374 A1**,** die DE 10 2010 015 085 A1 und die DE 10 2009 012 241 A1**.**

Bezüglich der Herstellkosten der vorbekannten Käfigsegmente sowie hinsichtlich der Flexibilität des Einsatzes derselben bestehen allerdings gewisse Einschränkungen.

Der Erfindung liegt die **Aufgabe** zugrunde, ein gattungsgemäßes Lager so fortzubilden, dass die genannten Nachteile eliminiert werden können. Demgemäß soll eine noch preiswertere Herstellung möglich sein; ferner soll die Flexibilität des Einsatzes erhöht werden. Schließlich soll eine zuverlässige Führung des Käfigsegments sichergestellt werden.

Die **Lösung** dieser Aufgabe durch die Erfindung ist dadurch gekennzeichnet, dass ein radial außenliegendes Ende des mindestens einen Führungselements von der Laufbahn des Außenrings einen größeren Abstand aufweist, als der Abstand zwischen dem radial außenliegenden Ende des Endelements und der Laufbahn des Außenrings.

Das Endelement ist dabei bevorzugt als plattenförmiges Bauteil mit konstanter Dicke ausgebildet.

Das Endelement kann in seinem radial äußeren und/oder in seinem radial inneren Bereich eine konvexe Oberfläche aufweisen.

Um die zuverlässige Führung des Käfigsegments weiter zu verbessern, ist vorzugsweise vorgesehen, dass ein radial innenliegendes Ende des mindestens einen Führungselements von der Laufbahn des Innenrings einen größeren Abstand aufweist, als der Abstand zwischen den radial innenliegenden Ende des Endelements und einer Schulterfläche am Innenring.

Das Käfigsegment ist bevorzugt als einstückiges Bauteil ausgebildet. Es kann alternativ aber auch aus mehreren miteinander verbundenen Teilen zusammengesetzt sein.

Es kann aus Kunststoff bestehen. Möglich ist es aber auch, dass die Käfigsegmente aus einem Material bestehen, dessen Wärmeausdehnungskoeffizient einen Wert aufweist, der in einem Toleranzband von +/- 15 %, verglichen mit dem Wärmeausdehnungskoeffizienten von Stahl liegt. Als Material, das diese Eigenschaft aufweist, hat sich insbesondere Gusseisen erwiesen, das mit Vorteil eingesetzt wird.

Das Wälzlager ist insbesondere ein Rollenlager, vorzugsweise ein Kegelrollenlager, ein Zylinderrollenlager oder ein Pendelrollenlager.

Die Erfindung stellt demgemäß auf ein vorzugsweise schultergeführtes Käfigsegment dar, das einen Abstandshalter zwischen zwei Wälzkörper bildet. Die Käfigsegmente (Käfig-Spacer) dienen somit lediglich als Trennelemente zwischen den Wälzkörpern. Die Käfigsegmente werden abwechselnd mit den Wälzkörpern im Lager verbaut; demgemäß entspricht die Anzahl der Käfigsegmente derjenigen der Wälzkörper.

Um das Herausrutschen des Käfigsegments in axiale Richtung zu verhindern, sind die Endelemente mit ihren Stirnflächen vorgesehen, die einen axialen Anschlag bzw. eine axiale Abstützung für die Wälzkörper bilden.

Dabei ist es nicht zwingend, dass das Endelement symmetrisch zu einer radial verlaufenden und die Achse aufweisenden Ebene ausgebildet ist. Es ist auch möglich, dass das Endelement mit seiner Stirnfläche nur - in Umfangsrichtung gesehen - zu einer Seite reicht und folglich nur für einen einzigen Wälzkörper eine axiale Anlage darstellt. Die axiale Anlage für den benachbarten Wälzkörper wird dann vom Endelement des benachbarten Käfigsegments gebildet.

Die Führungselemente am Käfigsegment, die der Führung der Wälzkörper dienen, haben bevorzugt eine kreisabschnittsförmige konkave Oberfläche, um einen geeigneten Kontakt zwischen dem Wälzkörper und dem Käfigelement herzustellen.

Die Käfigsegmente sind dabei bevorzugt schultergeführt. Im Falle einer Verkippung des Käfigsegments kann das Segment über die Endelemente auf der Schulter des Innenrings des Lagers geführt werden. Das Käfigsegment soll sich indes nicht auf der Innenringlaufbahn abstützen. Um dies zu erreichen, werden bevorzugt die oben genannten Abstandsverhältnisse gewählt, d. h. der Abstand zwischen dem Endelement des Käfigsegments und der Innenringschulter bzw. der Außenringlaufbahn ist jeweils kleiner als die Abstände der Führungselemente und den besagten Teilen des Lagers. Das Verkippen des Käfigsegments wird so begrenzt und ein mögliches Überrollen des Segments im Betrieb verhindert.

Durch den Einsatz einzelner separater Käfigsegmente wird die Flexibilität des Rollenkäfigverbunds vorteilhaft erhöht.

Ferner ist es möglich, die Kosten zu reduzieren, da Spritzgießwerkzeuge eingesetzt werden können, die einen kleineren Bauraum benötigen als bei vorbekannten Lösungen.

Da sich die Wärmeausdehnungskoeffizienten von Stahl und Kunststoff - aus dem die Käfigsegmente grundsätzlich gefertigt sein können - typischerweise unterscheiden, muss das Endspiel zwischen den Käfigsegmenten größer gestaltet werden, was sich für eine maximale Tragzahl nachteilig auswirken kann. Daher betrifft ein weiterer Aspekt der vorliegenden Erfindung die Werkstoffwahl für die Käfigsegmente. Dieser ist bevorzugt so gewählt, dass der Werkstoff des Käfigsegments einen ähnlichen Wärmeausdehnungskoeffizienten wie Stahl hat. Das gewählte Material des Käfigsegments sollte hierbei einen Wärmedehnungskoeffizienten von 10 x 10⁻⁶ bis 13 x 10⁻⁶ 1/K liegen (bei Stahl liegt er bei 11,5 x 10⁻⁶ 1/K). Wie oben ausgeführt, hat sich Gusseisen als Werkstoff für die Käfigsegmente bewährt; dieses Material erfüllt die genannte Bedingung.

In der Zeichnung ist ein Ausführungsbeispiel der Erfindung dargestellt. Es zeigen:

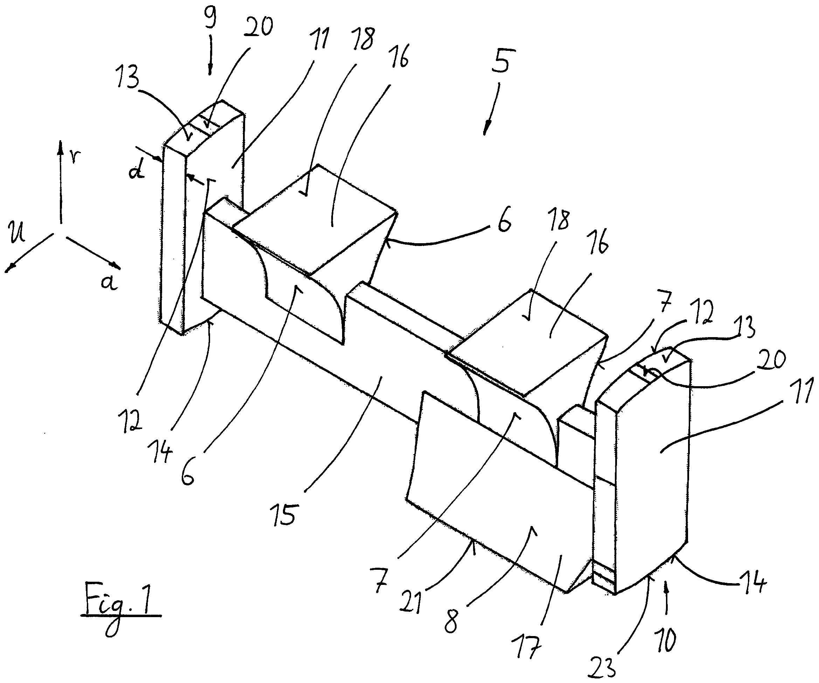

- Fig. 1: in perspektivischer Darstellung ein Käfigsegment eines Käfigs eines Kegelrollenlagers,
- Fig. 1: einen Radialschnitt durch ein Kegelrollenlagers, wobei zwischen zwei Kegelrollen ein Käfigsegment nach Fig. 1 angeordnet ist, und
- Fig. 3: eine stirnseitige Ansicht einer Anzahl Kegelrollen mit zwischen ihnen angeordneten Käfigsegmenten.

In den Figuren ist für die Anwendung in einem Kegelrollenlager das erfindungsgemäße Konzept illustriert.

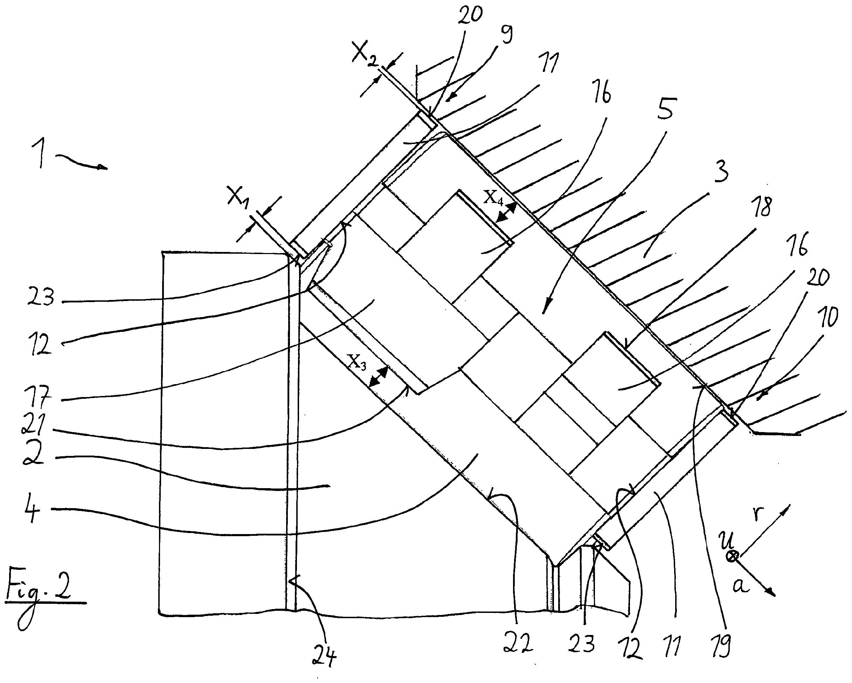

In Fig. 2 ist zu sehen, dass das Wälzlager 1 einen Innenring 2 und einen Außenring 3 umfasst, die relativ zueinander drehen können, wobei zwischen den Ringen Wälzkörper 4 - vorliegend Kegelrollen - angeordnet sind. Die Wälzkörper 4 werden von einem Käfig gehalten.

In den Figuren sind die axiale Richtung a der Wälzkörper 4, die radiale Richtung r der Wälzkörper 4 sowie die Umfangsrichtung U angegeben.

Der Käfig ist nicht einstückig ausgebildet, sondern er wird durch eine Anzahl separater Käfigsegmente 5 gebildet. Ein solches Käfigsegment 5 ist in Fig. 1 perspektivisch dargestellt. Das Käfigsegment 5 ist bezüglich einer sich in radiale Richtung r erstreckende und die Achse a aufweisende Mittenebene symmetrisch. Hiernach besteht jedes Käfigsegment 5 aus einem balkenartigen Trägerelement 15, an dem im Ausführungsbeispiel zwei radial außenliegend angeordnete Führungselemente 16 und ein radial innenliegendes Führungselement 17 angeordnet sind. Die Führungselemente 16, 17 weisen konkave Kontaktflächen 6, 7 und 8 auf, die der Form der Wälzkörper 4 an der jeweiligen Stelle angepasst sind.

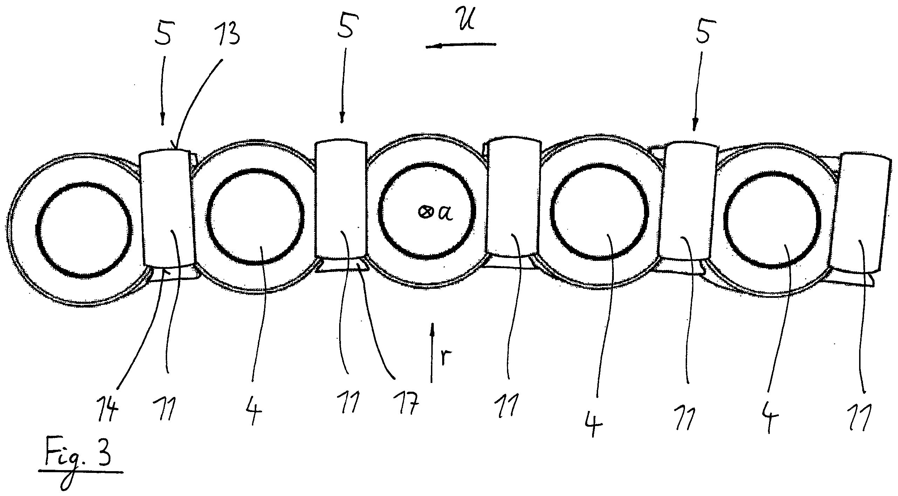

Wesentlich ist, dass an den axialen Enden 9 und 10 des Käfigsegments 5 je ein Endelement 11 angeordnet, d. h. angeformt ist. Das Endelement 11 ist plattenförmig ausgebildet und hat in axiale Richtung a gesehen eine im wesentlichen rechteckige Form (s. insbesondere Fig. 3). Die Dicke d des Endelements 11 gemessen in axiale Richtung a ist konstant, was aber keinesfalls zwingend ist. Die Endelemente 11 bilden an ihrer dem Wälzkörper 4 zugewandten Seite jeweils eine Stirnfläche 12, die zur axialen Anlage des Wälzkörpers 4 ausgebildet und vorgesehen ist. Damit wird verhindert, dass das Käfigsegment 5 axial aus dem Lager 1 herausrutschen kann.

Die radial äußere und die radial innere Fläche des Endelements 11 ist jeweils leicht konvex ausgebildet - s. konvexe Oberflächen 13 und 14 -, um im Falle eines Anlaufs an der Laufbahn 19 des Außenrings 3 bzw. an einer Schulterfläche 24 des Innenrings 2 gute Kontaktverhältnisse zu realisieren.

Um eine optimale Führung des Käfigsegments 5 sicherzustellen, ist vorgesehen, dass ein radial außenliegendes Ende 18 des Führungselements 16 von der Laufbahn 19 des Außenrings 3 einen größeren Abstand X₄ aufweist, als der Abstand X₂ zwischen dem radial außenliegenden Ende 20 des Endelements 11 und der Laufbahn 19 des Außenrings 3. Ferner ist zu diesem Zweck vorgesehen, dass ein radial innenliegendes Ende 21 des Führungselements 17 von der Laufbahn 22 des Innenrings 2 einen größeren Abstand X₃ aufweist, als der Abstand X₁ zwischen den radial innenliegenden Ende 23 des Endelements 11 und der Schulterfläche 24 am Innenring 2.

Zur genauen Zählung der Führungselemente 16, 17 und der Kontaktflächen 6, 7, 8 sei folgendes bemerkt: Zwingend ist lediglich eines der Führungselemente 16 bzw. 17. Es kann ausreichend sein, ein Führungselement 16 vorzusehen, das mittig auf dem Trägerelement 15 angeordnet ist. Im Ausführungsbeispiel sind zwei Führungselemente 16 und ein Führungselement 17 vorgesehen. Jedes Führungselement 16, 17 hat zwei Kontaktflächen 6, 7 bzw. 8. Dies ergibt sich daraus, dass ein Führungselement 16, 17 Anlaufflächen für die beiden benachbarten Wälzkörper 4 aufweisen muss. Im Ausführungsbeispiel liegen also drei Führungselemente mit sechs Kontaktflächen vor.

Indes ist als minimale Lösung ein Käfigsegment 5 vorzusehen, das ein einziges Führungselement aufweist, das dann zwei voneinander weg weisende Kontaktflächen hat.

### Bezugszeichenliste

- 1: Wälzlager
- 2: Innenring
- 3: Außenring
- 4: Wälzkörper
- 5: Käfigsegment
- 6: Kontaktfläche
- 7: Kontaktfläche
- 8: Kontaktfläche
- 9: axiales Ende
- 10: axiales Ende
- 11: Endelement
- 12: Stirnfläche
- 13: konvexe Oberfläche
- 14: konvexe Oberfläche
- 15: Trägerelement
- 16: Führungselement
- 17: Führungselement
- 18: radial außenliegendes Ende des Führungselements
- 19: Laufbahn des Außenrings
- 20: radial außenliegendes Ende des Endelements
- 21: radial innenliegendes Ende des Führungselements
- 22: Laufbahn des Innenrings
- 23: radial innenliegendes Ende des Endelements
- 24: Schulterfläche
- d: Dicke
- X₁: Abstand
- X₂: Abstand
- X₃: Abstand
- X₄: Abstand

- U: Umfangsrichtung
- a: axiale Richtung
- r: radiale Richtung

## Patentansprüche

1. Wälzlager (1) mit mindestens einem Innenring (2) und mindestens einem Außenring (3), wobei zwischen den Lagerringen (2, 3) eine Anzahl Wälzkörper (4) angeordnet sind, wobei die Wälzkörper (4) durch einen Käfig gehalten werden, wobei der Käfig aus einer Anzahl Käfigsegmenten (5) besteht, wobei jeweils ein Käfigsegment (5) in Umfangsrichtung des Wälzlagers zwischen zwei Wälzkörpern (4) angeordnet ist, wobei jedes Käfigsegment (5) zwei Wälzkörper (4) an mindestens zwei der Form des Wälzkörpers (4) angepassten Kontaktflächen (6, 7, 8) berührt, ohne den Wälzkörper (4) rahmenartig einzufassen, wobei die einzelnen Käfigsegmente (5) nicht miteinander verbunden sind, wobei jedes Käfigsegment (5) an seinen axialen Enden (9, 10) jeweils ein Endelement (11) mit einer Stirnfläche (12) zur axialen Anlage des Wälzkörpers (4) aufweist und wobei die beiden axial endseitig (9, 10) angeordneten Endelemente (11) mit einem Trägerelement (15) miteinander verbunden sind, wobei am Trägerelement (15) mindestens ein Führungselement (16, 17) angeordnet ist, das eine der Form des Wälzkörpers (4) angepasste Kontaktfläche (6, 7, 8) aufweist,
**dadurch gekennzeichnet, dass**
das mindestens eine Führungselement (16, 17) das Trägerelement (15) radial überragt und ein radial außenliegendes Ende (18) des mindestens einen Führungselements (16) von der Laufbahn (19) des Außenrings (3) einen größeren Abstand (X₄) aufweist, als der Abstand (X₂) zwischen dem radial außenliegenden Ende (20) des Endelements (11) und der Laufbahn (19) des Außenrings (3).

2. Wälzlager nach Anspruch 1, **dadurch gekennzeichnet, dass** das Endelement (11) als plattenförmiges Bauteil mit konstanter Dicke (d) ausgebildet ist.

3. Wälzlager nach Anspruch 1 oder 2, **dadurch gekennzeichnet, dass** das Endelement (11) in seinem radial äußeren und/oder in seinem radial inneren Bereich eine konvexe Oberfläche (13, 14) aufweist.

4. Wälzlager nach einem der Ansprüche 1 bis 3, **dadurch gekennzeichnet, dass** ein radial innenliegendes Ende (21) des mindestens einen Führungselements (17) von der Laufbahn (22) des Innenrings (2) einen größeren Abstand (X₃) aufweist, als der Abstand (X₁) zwischen den radial innenliegenden Ende (23) des Endelements (11) und einer Schulterfläche (24) am Innenring (2).

5. Wälzlager nach einem der Ansprüche 1 bis 4, **dadurch gekennzeichnet, dass** das Käfigsegment (5) als einstückiges Bauteil ausgebildet ist.

6. Wälzlager nach einem der Ansprüche 1 bis 5, **dadurch gekennzeichnet, dass** das Käfigsegment (5) aus Kunststoff besteht.

7. Wälzlager nach einem der Ansprüche 1 bis 5, **dadurch gekennzeichnet, dass** die Käfigsegmente (5) aus einem Material bestehen, dessen Wärmeausdehnungskoeffizient einen Wert aufweist, der in einem Toleranzband von +/- 15 %, verglichen mit dem Wärmeausdehnungskoeffizienten von Stahl liegt, wobei die Käfigsegmente (5) insbesondere aus Gusseisen bestehen.

8. Wälzlager nach einem der Ansprüche 1 bis 7, **dadurch gekennzeichnet, dass** es ein Rollenlager ist, vorzugsweise ein Kegelrollenlager, ein Zylinderrollenlager oder ein Pendelrollenlager.

## Claims

1. Anti-friction bearing (1) having at least one inner ring (2) and at least one outer ring (3), a number of rolling bodies (4) being arranged between the bearing rings (2, 3), the rolling bodies (4) being held by way of a cage, the cage consisting of a number of cage segments (5), in each case one cage segment (5) being arranged in the circumferential direction of the anti-friction bearing between two rolling bodies (4), each cage segment (5) making contact with two rolling bodies (4) on at least two contact faces (6, 7, 8) which are adapted to the shape of the rolling body (4), without surrounding the rolling body (4) in a frame-like manner, the individual cage segments (5) not being connected to one another, each cage segment (5) having, at its axial ends (9, 10), in each case one end element (11) with an end face (12) for axial contact of the rolling body (4), and the two end elements (11) which are arranged axially on the end side (9, 10) being connected to one another by way of a carrier element (15), at least one guide element (16, 17) which has a contact face (6, 7, 8) which is adapted to the shape of the rolling body (4) being arranged on the carrier element (15), **characterized in that** the at least one guide element (16, 17) protrudes radially beyond the carrier element (15), and a radially outer end (18) of the at least one guide element (16) being at a greater spacing (X₄) from the raceway (19) of the outer ring (3) than the spacing (X₂) between the radially outer end (20) of the end element (11) and the raceway (19) of the outer ring (3).

2. Anti-friction bearing according to Claim 1, **characterized in that** the end element (11) is configured as a plate-shaped component with a constant thickness (d) .

3. Anti-friction bearing according to Claim 1 or 2, **characterized in that** the end element (11) has a convex surface (13, 14) in its radially outer region and/or in its radially inner region.

4. Anti-friction bearing according to one of Claims 1 to 3, **characterized in that** a radially inner end (21) of the at least one guide element (17) is at a greater spacing (X₃) from the raceway (22) of the inner ring (2) than the spacing (X₁) between the radially inner end (23) of the end element (11) and a shoulder face (24) on the inner ring (2).

5. Anti-friction bearing according to one of Claims 1 to 4, **characterized in that** the cage segment (5) is configured as a single-piece component.

6. Anti-friction bearing according to one of Claims 1 to 5, **characterized in that** the cage segment (5) consists of plastic.

7. Anti-friction bearing according to one of Claims 1 to 5, **characterized in that** the cage segments (5) consist of a material, the coefficient of thermal expansion of which has a value which lies in a tolerance range of ± 15% compared with the coefficient of thermal expansion of steel, the cage segments (5) consisting, in particular, of cast iron.

8. Anti-friction bearing according to one of Claims 1 to 7, **characterized in that** it is a roller bearing, preferably a tapered roller bearing, a cylindrical roller bearing or a self-aligning roller bearing.

## Revendications

1. Palier à roulement (1) comprenant au moins une bague intérieure (2) et au moins une bague extérieure (3), un certain nombre de corps de roulement (4) étant disposés entre les bagues de palier (2, 3), les corps de roulement (4) étant retenus par une cage, la cage étant constituée d'un certain nombre de segments de cage (5), un segment de cage (5) étant respectivement disposé entre deux corps de roulement (4) dans la direction périphérique du palier à roulement, chaque segment de cage (5) étant en contact avec deux corps de roulement (4) au niveau d'au moins deux surfaces de contact (6, 7, 8) adaptées à la forme du corps de roulement (4), sans entourer le corps de roulement (4) à la manière d'un cadre, les segments de cage (5) individuels n'étant pas reliés les uns aux autres, chaque segment de cage (5) comprenant, à ses extrémités axiales (9, 10), respectivement un élément d'extrémité (11) doté d'une surface frontale (12) servant à l'appui axial du corps de roulement (4), et les deux éléments d'extrémité (11) disposés axialement du côté des extrémités (9, 10) étant reliés l'un à l'autre à l'aide d'un élément de support (15), au moins un élément de guidage (16, 17) étant disposé sur l'élément de support (15), lequel élément de guidage comprend une surface de contact (6, 7, 8) adaptée à la forme du corps de roulement (4),
**caractérisé en ce que**
ledit au moins un élément de guidage (16, 17) dépasse radialement au-delà de l'élément de support (15), et une extrémité (18), située radialement à l'extérieur, dudit au moins un élément de guidage (16) présente une plus grande distance (X₄) au chemin de roulement (19) de la bague extérieure (3) que la distance (X₂) entre l'extrémité (20), située radialement à l'extérieur, de l'élément d'extrémité (11) et le chemin de roulement (19) de la bague extérieure (3).

2. Palier à roulement selon la revendication 1, **caractérisé en ce que** l'élément d'extrémité (11) est réalisé en tant que composant en forme de plaque d'épaisseur constante (d).

3. Palier à roulement selon la revendication 1 ou 2, **caractérisé en ce que** l'élément d'extrémité (11) comprend une surface convexe (13, 14) dans sa région radialement extérieure et/ou dans sa région radialement intérieure.

4. Palier à roulement selon l'une quelconque des revendications 1 à 3, **caractérisé en ce qu'**une extrémité (21), située radialement à l'intérieur, dudit au moins un élément de guidage (17) présente une plus grande distance (X₃) au chemin de roulement (22) de la bague intérieure (2) que la distance (X₁) entre l'extrémité (23), située radialement à l'intérieur, de l'élément d'extrémité (11) et une surface d'épaulement (24) sur la bague intérieure (2) .

5. Palier à roulement selon l'une quelconque des revendications 1 à 4, **caractérisé en ce que** le segment de cage (5) est réalisé en tant que composant d'un seul tenant.

6. Palier à roulement selon l'une quelconque des revendications 1 à 5, **caractérisé en ce que** le segment de cage (5) est constitué de matière synthétique.

7. Palier à roulement selon l'une quelconque des revendications 1 à 5, **caractérisé en ce que** les segments de cage (5) sont constitués d'un matériau dont le coefficient de dilatation thermique présente une valeur qui est comprise dans une bande de tolérances de +/- 15 %, par comparaison avec le coefficient de dilatation thermique de l'acier, les segments de cage (5) étant en particulier constitués de fonte.

8. Palier à roulement selon l'une quelconque des revendications 1 à 7, **caractérisé en ce qu'**il s'agit d'un palier à rouleaux, de préférence d'un palier à rouleaux coniques, d'un palier à rouleaux cylindriques ou d'un palier à rotule sur rouleaux.
